# EUROPEAN PATENT APPLICATION

(11) **EP 4 838 823 A1**
(43) Date of publication of application: **11.11.2026**
(21) Application number: 25751066.9
(22) Date of filing: 10.01.2025
(51) Int. Cl.: H04L 5/00

(54) **COMMUNICATION METHOD AND COMMUNICATION APPARATUS**

(30) Priority: 07.02.2024 CN 202410175760
(71) Applicant: Huawei Technologies Co., Ltd., Shenzhen, Guangdong 518129 (CN)
(72) Inventor: YANG, Ruonan, Shenzhen, Guangdong 518129 (CN); ZHANG, Jiayin, Shenzhen, Guangdong 518129 (CN); CHEN, Ying, Shenzhen, Guangdong 518129 (CN); WANG, Jun, Shenzhen, Guangdong 518129 (CN)
(74) Representative: Grünecker Patent- und Rechtsanwälte PartG mbB
(86) International application number: PCT/CN2025/071765
(87) International publication number: WO 2025/167464

(57) **Abstract**

This application provides a communication method and a communication apparatus. The method includes: obtaining a length of a first orthogonal cover code OCC sequence and an index of the first OCC sequence; determining at least one first subcarrier based on the length of the first OCC sequence and the index of the first OCC sequence; sending first data in a first time unit through the at least one first subcarrier, where the first data is obtained by performing OCC encoding on second data based on the first OCC sequence; and sending a demodulation reference signal DMRS sequence in a second time unit through at least one second subcarrier, where the at least one second subcarrier belongs to the at least one first subcarrier, and the DMRS sequence is used to demodulate the first data. According to the method, channel estimation accuracy is improved and data demodulation performance is enhanced.

## Description

This application claims priority to Chinese Patent Application No. 202410175760.X, filed with the China National Intellectual Property Administration on February 7, 2024 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

A non-terrestrial communication network, for example, satellite communication, has significant advantages such as global coverage, long-distance transmission, flexible networking, convenient deployment, and free from geographical constraints, and has been widely applied to a plurality of fields such as maritime communication, positioning and navigation, disaster relief, scientific experiments, video broadcasting, and earth observation.

A demodulation reference signal (demodulation reference signal, DMRS) is mainly used to demodulate a physical uplink control channel (physical uplink control channel, PUCCH) and a physical uplink shared channel (physical uplink shared channel, PUSCH). In related technical solutions, a mismatch may occur between a subcarrier for sending a DMRS sequence by a terminal device and a subcarrier for transmitting data by the terminal device, resulting in inaccurate channel estimation and degraded data demodulation performance.

In view of this, how to improve channel estimation accuracy and enhance data demodulation performance becomes a technical problem that needs to be urgently resolved.

### SUMMARY

This application provides a communication method and a communication apparatus, to improve channel estimation accuracy and enhance data demodulation performance.

According to a first aspect, a communication method is provided. The method may be performed by a terminal device. The terminal device herein may be the terminal device itself, or may be a processor, a module, a chip, a chip system, or the like that is in the terminal device and that implements the method. This is not limited in this application. The method includes: obtaining a length of a first orthogonal cover code OCC sequence and an index of the first OCC sequence; determining at least one first subcarrier based on the length of the first OCC sequence and the index of the first OCC sequence; sending first data in a first time unit through the at least one first subcarrier, where the first data is obtained by performing OCC encoding on second data based on the first OCC sequence; and sending a demodulation reference signal DMRS sequence in a second time unit through at least one second subcarrier, where the at least one second subcarrier belongs to the at least one first subcarrier, and the DMRS sequence is used to demodulate the first data.

There are a plurality of implementations in which a first terminal device obtains the length of the first OCC sequence. In a possible implementation, a network device may configure the length of the first OCC sequence for the first terminal device by using indication information. In another possible implementation, the network device may alternatively agree with the first terminal device that the length of the first OCC sequence is a fixed value, and the value needs to be divisible by ${M}_{SC}^{PUCCH}$, where ${M}_{SC}^{PUCCH} = 12 * {N}_{RB}$.

There are a plurality of implementations in which the first terminal device obtains the index of the first OCC sequence. This is not specifically limited in this embodiment of this application. In a possible implementation, the network device may configure the index of the first OCC sequence for the first terminal device by using the indication information. In another possible implementation, the first terminal device may alternatively determine the index of the first OCC sequence based on an antenna port number sent by the network device.

In the foregoing technical solution, a subcarrier for transmitting data matches a subcarrier for transmitting a DMRS sequence, so that channel estimation accuracy is improved, and data demodulation performance is enhanced.

With reference to the first aspect, in some implementations of the first aspect, when a quantity of the at least one first subcarrier is an odd number, the at least one second subcarrier is the at least one first subcarrier.

With reference to the first aspect, in some implementations of the first aspect, when a quantity of the at least one first subcarrier is an even number, the at least one second subcarrier is determined based on the length of the first OCC sequence, the index of the first OCC sequence, and the antenna port number.

With reference to the first aspect, in some implementations of the first aspect, the method further includes: receiving the indication information, where the indication information is used to indicate the antenna port number.

With reference to the first aspect, in some implementations of the first aspect, the index of the first OCC sequence is determined based on the antenna port number.

In the foregoing technical solution, configuration message transmission between the terminal device and the network device can be reduced, thereby saving bandwidth resources.

With reference to the first aspect, in some implementations of the first aspect, the length of the first OCC sequence is 2.

With reference to the first aspect, in some implementations of the first aspect, the at least one second subcarrier is an intersection between the at least one first subcarrier and at least one third subcarrier, and the at least one third subcarrier depends on the antenna port number.

In the foregoing technical solution, the intersection between the at least one first subcarrier and the at least one third subcarrier is determined as the at least one second subcarrier, so that better compatibility with an existing terminal device is achieved.

With reference to the first aspect, in some implementations of the first aspect, the at least one third subcarrier satisfies the following formula: $k 1 = 4 n + 2 k ′ + Δ$ where k1 represents a position index of the at least one second subcarrier, *n* is used to determine an element in the DMRS sequence transmitted on the second subcarrier, *k'* represents an index of an element in an OCC sequence of a DMRS sequence, and Δ represents different code division multiplexing CDM groups.

With reference to the first aspect, in some implementations of the first aspect, the at least one first subcarrier satisfies the following formula: $OCC index + \left(m-1\right) * OCC length , m = 1 , … , d ;$ $OCC index - 1 + \left(m-1\right) * OCC length , m = 1 , … , d ; or$ $OCC index + 1 + \left(m-1\right) * OCC length , m = 1 , … , d$ where OCC index represents the index of the first OCC sequence, OCC length represents the length of the first OCC sequence, and d represents the quantity of the at least one first subcarrier.

With reference to the first aspect, in some implementations of the first aspect, the at least one second subcarrier satisfies the following formula: $k 2 = 4 n ∗ OCC length + 2 k ′ ∗ OCC length + Δ ∗ OCC length + OCC index$ where k2 represents the position index of the at least one second subcarrier, *n* is used to determine the element in the DMRS sequence transmitted on the second subcarrier,*k'* represents the index of the element in the OCC sequence of the DMRS sequence, and Δ represents different code division multiplexing CDM groups.

According to a second aspect, a communication method is provided. The method may be performed by a network device. The network device herein may be the network device itself, or may be a processor, a module, a chip, a chip system, or the like that is in the network device and that implements the method. This is not limited in this application. The method includes: receiving first data through at least one first subcarrier, where the first data is obtained by performing OCC encoding on second data based on a first OCC sequence; receiving a demodulation reference signal DMRS sequence through at least one second subcarrier, where the at least one second subcarrier belongs to the at least one first subcarrier, and the DMRS sequence is used to demodulate the first data; and demodulating the first data based on the DMRS sequence.

With reference to the second aspect, in some implementations of the second aspect, when a quantity of the at least one first subcarrier is an odd number, the at least one second subcarrier is the at least one first subcarrier.

With reference to the second aspect, in some implementations of the second aspect, when a quantity of the at least one first subcarrier is an even number, the at least one second subcarrier is determined based on a length of the first OCC sequence, an index of the first OCC sequence, and an antenna port number.

With reference to the second aspect, in some implementations of the second aspect, the method further includes:
sending indication information, where the indication information indicates the antenna port number.

With reference to the second aspect, in some implementations of the second aspect, the antenna port number indicates the index of the first OCC sequence.

With reference to the second aspect, in some implementations of the second aspect, the length of the first OCC sequence is 2.

With reference to the second aspect, in some implementations of the second aspect, the at least one second subcarrier is an intersection between the at least one first subcarrier and at least one third subcarrier, and the at least one third subcarrier depends on the antenna port number.

With reference to the second aspect, in some implementations of the second aspect, the at least one third subcarrier satisfies the following formula: $k 1 = 4 n + 2 k ′ + Δ$ where k1 represents a position index of the at least one second subcarrier, *n* is used to determine an element in the DMRS sequence transmitted on the second subcarrier, *k'* represents an index of an element in an OCC sequence of a DMRS sequence, and Δ represents different code division multiplexing CDM groups.

With reference to the second aspect, in some implementations of the second aspect, the at least one first subcarrier satisfies the following formula: $OCC index + \left(m-1\right) * OCC length , m = 1 , … , d ;$ $OCC index - 1 + \left(m-1\right) * OCC length , m = 1 , … , d ; or$ $OCC index + 1 + \left(m-1\right) * OCC length , m = 1 , … , d$ where OCC index represents the index of the first OCC sequence, OCC length represents the length of the first OCC sequence, and d represents the quantity of the at least one first subcarrier.

With reference to the second aspect, in some implementations of the second aspect, the at least one second subcarrier satisfies the following formula: $k 2 = 4 n ∗ OCC length + 2 k ′ ∗ OCC length + Δ ∗ OCC length + OCC index$ where k2 represents the position index of the at least one second subcarrier, *n* is used to determine the element in the DMRS sequence transmitted on the second subcarrier, *k'* represents the index of the element in the OCC sequence of the DMRS sequence, and Δ represents different code division multiplexing CDM groups.

It should be understood that, for beneficial effects of the second aspect and the implementations, refer to the beneficial effects of the first aspect and the implementations. Details are not described herein again.

According to a third aspect, a communication apparatus is provided. The apparatus includes a transceiver unit and a processing unit. The processing unit is configured to obtain a length of a first orthogonal cover code OCC sequence and an index of the first OCC sequence. The processing unit is further configured to determine at least one first subcarrier based on the length of the first OCC sequence and the index of the first OCC sequence. The transceiver unit is configured to send first data in a first time unit through the at least one first subcarrier, where the first data is obtained by performing OCC encoding on second data based on the first OCC sequence. The transceiver unit is further configured to send a demodulation reference signal DMRS sequence in a second time unit through at least one second subcarrier, where the at least one second subcarrier belongs to the at least one first subcarrier, and the DMRS sequence is used to demodulate the first data.

With reference to the third aspect, in some implementations of the third aspect, when a quantity of the at least one first subcarrier is an odd number, the at least one second subcarrier is the at least one first subcarrier.

With reference to the third aspect, in some implementations of the third aspect, when a quantity of the at least one first subcarrier is an even number, the at least one second subcarrier is determined based on the length of the first OCC sequence, the index of the first OCC sequence, and an antenna port number.

With reference to the third aspect, in some implementations of the third aspect, the transceiver unit is further configured to receive indication information, where the indication information indicates the antenna port number.

With reference to the third aspect, in some implementations of the third aspect, the processing unit is specifically configured to determine the index of the first OCC sequence based on the antenna port number.

With reference to the third aspect, in some implementations of the third aspect, the length of the first OCC sequence is 2.

With reference to the third aspect, in some implementations of the third aspect, the at least one second subcarrier is an intersection between the at least one first subcarrier and at least one third subcarrier, and the at least one third subcarrier depends on the antenna port number.

With reference to the third aspect, in some implementations of the third aspect, the at least one third subcarrier satisfies the following formula: $k 1 = 4 n + 2 k ′ + Δ$ where k1 represents a position index of the at least one second subcarrier, *n* is used to determine an element in the DMRS sequence transmitted on the second subcarrier, *k'* represents an index of an element in an OCC sequence of a DMRS sequence, and Δ represents different code division multiplexing CDM groups.

With reference to the third aspect, in some implementations of the third aspect, the at least one first subcarrier satisfies the following formula: $OCC index + \left(m-1\right) * OCC length , m = 1 , … , d ;$ $OCC index - 1 + \left(m-1\right) * OCC length , m = 1 , … , d ;$ or $OCC index + 1 + \left(m-1\right) * OCC length , m = 1 , … , d$ where OCC index represents the index of the first OCC sequence, OCC length represents the length of the first OCC sequence, and d represents the quantity of the at least one first subcarrier.

With reference to the third aspect, in some implementations of the third aspect, the at least one second subcarrier satisfies the following formula: $k 2 = 4 n ∗ OCC length + 2 k ′ ∗ OCC length + Δ ∗ OCC length + OCC index$ where k2 represents the position index of the at least one second subcarrier, *n* is used to determine the element in the DMRS sequence transmitted on the second subcarrier, *k'* represents the index of the element in the OCC sequence of the DMRS sequence, and Δ represents different code division multiplexing CDM groups.

It should be understood that, the third aspect is an implementation on an apparatus side corresponding to the first aspect, and explanations and descriptions of beneficial effects of the first aspect are also applicable to the third aspect. Details are not described again.

According to a fourth aspect, a communication apparatus is provided. The apparatus includes a transceiver unit and a processing unit. The transceiver unit is configured to receive first data through at least one first subcarrier, where the first data is obtained by performing OCC encoding on second data based on a first OCC sequence. The transceiver unit is further configured to receive a demodulation reference signal DMRS sequence through at least one second subcarrier, where the at least one second subcarrier belongs to the at least one first subcarrier, and the DMRS sequence is used to demodulate the first data. The processing unit is configured to demodulate the first data based on the DMRS sequence.

With reference to the fourth aspect, in some implementations of the fourth aspect, when a quantity of the at least one first subcarrier is an odd number, the at least one second subcarrier is the at least one first subcarrier.

With reference to the fourth aspect, in some implementations of the fourth aspect, when a quantity of the at least one first subcarrier is an even number, the at least one second subcarrier is determined based on a length of the first OCC sequence, an index of the first OCC sequence, and an antenna port number.

With reference to the fourth aspect, in some implementations of the fourth aspect, the transceiver unit is further configured to send indication information, where the indication information indicates the antenna port number.

With reference to the fourth aspect, in some implementations of the fourth aspect, the antenna port number indicates the index of the first OCC sequence.

With reference to the fourth aspect, in some implementations of the fourth aspect, the length of the first OCC sequence is 2.

With reference to the fourth aspect, in some implementations of the fourth aspect, the at least one second subcarrier is an intersection between the at least one first subcarrier and at least one third subcarrier, and the at least one third subcarrier depends on the antenna port number.

With reference to the fourth aspect, in some implementations of the fourth aspect, the at least one third subcarrier satisfies the following formula: $k 1 = 4 n + 2 k ′ + Δ$ where k1 represents a position index of the at least one second subcarrier, *n* is used to determine an element in the DMRS sequence transmitted on the second subcarrier, *k'* represents an index of an element in an OCC sequence of a DMRS sequence, and Δ represents different code division multiplexing CDM groups.

Optionally, the at least one first subcarrier satisfies the following formula: $OCC index + \left(m-1\right) * OCC length , m = 1 , … , d ;$ $OCC index - 1 + \left(m-1\right) * OCC length , m = 1 , … , d ;$ or $OCC index + 1 + \left(m-1\right) * OCC length , m = 1 , … , d$ where OCC index represents the index of the first OCC sequence, OCC length represents the length of the first OCC sequence, and d represents the quantity of the at least one first subcarrier.

Optionally, the at least one second subcarrier satisfies the following formula: $k 2 = 4 n ∗ OCC length + 2 k ′ ∗ OCC length + Δ ∗ OCC length + OCC index$ where k2 represents the position index of the at least one second subcarrier, *n* is used to determine the element in the DMRS sequence transmitted on the second subcarrier, *k'* represents the index of the element in the OCC sequence of the DMRS sequence, and Δ represents different code division multiplexing CDM groups.

It should be understood that, the fourth aspect is an implementation on an apparatus side corresponding to the second aspect, and explanations and descriptions of beneficial effects of the second aspect are also applicable to the fourth aspect. Details are not described again.

According to a fifth aspect, this application provides a communication apparatus. The communication apparatus includes a processor, configured to implement the method in any implementation of the first aspect or the method in any implementation of the second aspect. The processor is coupled to a memory, the memory is configured to store instructions and data, and when executing the instructions stored in the memory, the processor may implement the method in any implementation of the first aspect or the method in any implementation of the second aspect.

Optionally, the communication apparatus may further include the memory. Optionally, the memory may be coupled to the processor. Optionally, the communication apparatus may further include a communication interface. The communication interface is used by the apparatus to communicate with another device. For example, the communication interface may be a transceiver, a hardware circuit, a bus, a module, a pin, or another type of communication interface.

In an example, the communication apparatus may be a network device, for example, an access network device, may be an apparatus, a module, a chip, or the like disposed in the network device, or may be an apparatus that can be used in cooperation with the network device.

In another example, the communication apparatus may be a terminal device, may be an apparatus, a module, a chip, or the like disposed in the terminal device, or may be an apparatus that can be used in cooperation with the terminal device.

According to a sixth aspect, this application provides a communication system, including a terminal device and a network device. The terminal device is the terminal device according to any one of the first aspect or the implementations of the first aspect, and the network device is the network device according to any one of the second aspect or the implementations of the second aspect.

According to a seventh aspect, this application further provides a computer program. When the computer program is run on a computer, the computer is caused to perform the method according to any one of the first aspect and the second aspect or the implementations of the first aspect and the second aspect.

According to an eighth aspect, this application further provides a computer program product, including instructions. When the instructions are run on a computer, the computer is caused to perform the method according to any one of the first aspect and the second aspect or the implementations of the first aspect and the second aspect.

According to a ninth aspect, this application further provides a computer-readable storage medium. The computer-readable storage medium stores a computer program or instructions. When the computer program or the instructions are run on a computer, the computer is caused to perform the method according to any one of the first aspect and the second aspect or the implementations of the first aspect and the second aspect.

According to a tenth aspect, this application further provides a chip. The chip is configured to read a computer program stored in a memory, to perform the method according to any one of the first aspect and the second aspect or the implementations of the first aspect and the second aspect.

According to an eleventh aspect, this application further provides a chip system. The chip system includes a processor, configured to support an apparatus in implementing the method according to any one of the first aspect and the second aspect or the implementations of the first aspect and the second aspect. In a possible design, the chip system further includes a memory, and the memory is configured to store a program and data that are necessary for the apparatus. The chip system may include a chip, or may include a chip and another discrete component.

### BRIEF DESCRIPTION OF DRAWINGS

FIG. 1 is a diagram of a communication system 100 to which an embodiment of this application is applicable;
FIG. 2 is a diagram of an existing subcarrier for transmitting a DMRS sequence;
FIG. 3 is a schematic flowchart of a communication method according to an embodiment of this application;
FIG. 4 is a diagram of a subcarrier used by a UE 1 for transmitting data and a subcarrier for transmitting a DMRS according to an embodiment of this application;
FIG. 5 is another diagram of a subcarrier used by a UE 1 for transmitting data and a subcarrier for transmitting a DMRS according to an embodiment of this application;
FIG. 6 is a diagram of a structure of a communication apparatus 600 according to an embodiment of this application; and
FIG. 7 is a diagram of a structure of a communication apparatus 700 according to an embodiment of this application.

### DESCRIPTION OF EMBODIMENTS

The following describes technical solutions of this application with reference to accompanying drawings.

The technical solutions of this application may be applied to a non-terrestrial network (non-terrestrial network, NTN) system like a satellite communication system, a high altitude platform station (high altitude platform station, HAPS) communication system, or an uncrewed aerial vehicle, for example, an integrated communication and navigation (integrated communication and navigation, IcaN) system, a global navigation satellite system (global navigation satellite system, GNSS), and an ultra-dense low-orbit satellite communication system.

The satellite communication system may be integrated with a conventional mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), a future mobile communication system, and the like.

The satellite communication system includes a user equipment (UE) and a network device. The user equipment may also be referred to as a user terminal, a mobile station, or the like. The network device may include one or more satellites and one or more terrestrial station devices. The terrestrial station device may also be referred to as a core network device. The satellite may be a low earth orbit (low earth orbit, LEO) satellite, a non-geostationary earth orbit (non-geostationary earth orbit, NGEO) satellite, or the like. The satellite may provide a communication service, a navigation service, a positioning service, and the like for a terminal device by using a plurality of beams. The satellite uses the plurality of beams to cover a service area, and different beams may be used to perform communication in one or more manners of time division, frequency division, and space division. The satellite performs wireless communication with the terminal device by broadcasting a communication signal, a navigation signal, and the like. The satellite may perform wireless communication with the terrestrial station device. The satellite mentioned in embodiments of this application may be a satellite base station, may include an orbit receiver or a repeater configured to relay information, or may be a network side device mounted on a satellite.

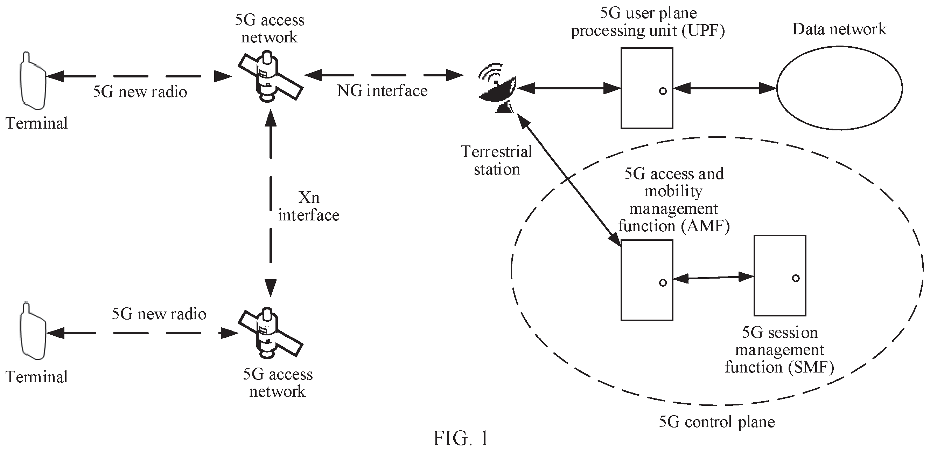

FIG. 1 is a diagram of a communication system 100 to which an embodiment of this application is applicable. As shown in FIG. 1, a satellite provides a communication service for a terminal device by using a plurality of beams. The satellite in this scenario is a non-geostationary earth orbit (non-geostationary earth orbit, NGEO) satellite, and the satellite is connected to a core network device. The satellite uses the plurality of beams to cover a service area, and different beams may be used to perform communication in one or more manners of time division, frequency division, and space division. The satellite provides communication and navigation services for the terminal device by broadcasting a communication signal and a navigation signal. The satellite mentioned in embodiments of this application may alternatively be a satellite base station or a network side device mounted on a satellite.

The satellite communication system includes a transparent satellite architecture and a non-transparent satellite architecture. Transparent transmission is also referred to as bent-pipe forwarding transmission, that is, only processes such as frequency conversion and signal amplification are performed on a signal on the satellite, and the satellite is transparent for the signal and seems like nonexistent. Non-transparent transmission is also referred to as regenerative (on-satellite access/processing) transmission, that is, the satellite has a part or all of functions of a base station.

The terminal device mentioned in embodiments of this application includes various handheld devices, vehicle-mounted devices, wearable devices, or compute devices that have a wireless communication function, or other processing devices connected to a wireless modem, and may be specifically user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), a handheld device or a compute device having a wireless communication function or another processing device connected to a wireless modem, a vehicle-mounted device or a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network or a future communication network, or the like.

A terrestrial station device is, for example, a device in a core network (core network, CN) in an existing mobile communication architecture (for example, a 3GPP access architecture of a 5G network) or a device in a core network in a future mobile communication architecture. As a bearer network, the core network provides an interface to a data network, provides communication connection, authentication, management, and policy control for the user equipment (UE), bears a data service, and the like. The CN may further include network elements such as an access and mobility management function (Access and Mobility Management Function, AMF) network element, a session management function (Session Management Function, SMF) network element, an authentication server function (Authentication Server Function, AUSF) network element, a policy control function (Policy control Function, PCF) node, and a user plane function (User Plane Function, UPF) network element. The AMF network element is configured to manage access and mobility of the UE, and is mainly responsible for functions such as UE authentication, UE mobility management, and UE paging.

The network device may further include but is not limited to: an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a gNB, a TRP, or a TP in a 5G system, or one or one group (including a plurality of antenna panels) of antenna panels of a base station in a 5G system. In addition, the network device may alternatively be a network node that forms a gNB or a TP, for example, a BBU, a distributed unit (distributed unit, DU), or the like. Alternatively, the network device may be a device responsible for a network side function in a device-to-device (device-to-device, D2D) communication system, a machine-to-machine (machine-to-machine, M2M) communication system, an internet of things (Internet of Things, IoT) communication system, an internet of vehicles communication system, or another communication system.

A terrestrial mobile terminal UE accesses a network through 5G new radio. A 5G access network device is deployed on a satellite, and is connected to a terrestrial core network through a radio link. In addition, there is a radio link between satellites, to implement signaling exchange and user data transmission between access network devices. The network elements in FIG. 1 and interfaces of the network elements are described as follows.

Terminal device: is a mobile device that supports 5G new radio, for example, a typical mobile device like a mobile phone or a pad. The terminal device may access a satellite network through an air interface and initiate a service like a call or network access.

5G access network device: mainly provides a radio access service, schedules a radio resource for an access terminal, provides a reliable wireless transmission protocol, a reliable data encryption protocol, and the like, and is, for example, a base station.

5G core network: provides services such as user access control, mobility management, session management, user security authentication, and charging. The 5G core network includes a plurality of functional units, and may be classified into a control-plane functional entity and a data-plane functional entity. An access and mobility management unit (access and mobility management function, AMF) is responsible for user access management, security authentication, and mobility management. A user plane function (user plane function, UPF) is responsible for functions such as managing user plane data transmission and traffic statistics collection.

Terrestrial station: is responsible for forwarding signaling and service data between a satellite access network device and the 5G core network.

5G new radio: is a radio link between the terminal and the access network device.

Xn interface: is an interface between the 5G access network device and the access network device, and is mainly for signaling exchange such as handover.

NG interface: is an interface between the 5G access network device and the 5G core network, and is mainly for exchanging signaling such as NAS of the core network and service data of users.

An application architecture in embodiments of this application may include a non-terrestrial network (non-terrestrial network, NTN). The non-terrestrial network includes nodes such as a satellite network, a high-altitude platform, and an uncrewed aerial vehicle, has significant advantages such as global coverage, long-distance transmission, flexible networking, convenient deployment, and no limitation from geographical conditions, and has been widely applied to a plurality of fields such as maritime communication, positioning and navigation, disaster relief, scientific experiments, video broadcasting, and earth observation. The 5G terrestrial network and the satellite network are integrated to form a global seamless integrated communication network that covers the sea, land, air, space, and ground. This network meets requirements of ubiquitous services of users.

A demodulation reference signal (demodulation reference signal, DMRS) is mainly used to demodulate a physical uplink control channel (physical uplink control channel, PUCCH) and a physical uplink shared channel (physical uplink shared channel, PUSCH).

Specifically, functions of the DMRS include but are not limited to:
1. Channel state information measurement: used to estimate a radio channel and provide a reference for data demodulation.
2. Data demodulation: The demodulation reference signal is used for uplink and downlink data demodulation.
3. Beam training: The system may perform beamforming on the DMRS to support beam training.
4. Time-frequency parameter tracking: used to track changes of a time-frequency parameter to adapt to different communication environments.

The following first provides a detailed description of data of different terminal devices transmitted on a PUCCH.

The PUCCH has a plurality of formats. A format 4 is mapped to a corresponding resource in a block OCC manner, and a length ${N}_{SF}^{PUCCH , 4}$ of an orthogonal cover code (orthogonal cover code, OCC) is fixed to 2 or 4. For example, a total quantity of quadrature amplitude modulation (quadrature amplitude modulation, QAM) symbols is M, the M symbols are divided into blocks, and a quantity of symbols in each block is $K = \frac{{M}_{SC}^{PUCCH , s}}{{N}_{SF}^{PUCCH , 4}}$, where ${M}_{SC}^{PUCCH , s}$ is a quantity of subcarriers allocated to the PUCCH, that is, 12* *N_{RB}*, and *N_{RB}* represents a quantity of subcarriers included in one resource block (resource block, RB).

A specific signal processing procedure includes the following processes:
(1) First, an OCC sequence is used to extend K QAM symbols [1, ..., K], as a whole block, to $K * {N}_{SF}^{PUCCH , 4}$ symbols. It is assumed that when a length of the OCC sequence is 2, two sequences shown in Table 1 are specified in a standard protocol. Refer to Table 1. Assuming that a terminal device (for example, a UE) uses an OCC sequence with n=0, that is, the OCC sequence is [+1 +1], extended data is [1, ..., K, 1, ..., K]. Assuming that a terminal device (for example, a UE) uses an OCC sequence with n=1, that is, the OCC sequence is [+1 -1], extended data is [1, ..., K, -1, ..., -K].
(2) $K * {N}_{SF}^{PUCCH , 4}$ -point discrete Fourier transform (discrete Fourier transform, DFT) is performed on the extended data to obtain frequency domain data, and the frequency domain data is mapped to corresponding subcarriers. The frequency domain data generated in this manner is characterized by a comb structure, and comb positions of data generated by using different sequences (for example, sequences corresponding to n=0 and n=1 in the foregoing table) have an offset. For example, when n=0, a generated sequence has a value only at an odd-numbered position, and a value at an even-numbered position is 0. When n=1, a generated sequence has a value only at an even-numbered position, and a value at an odd-numbered position is 0. Therefore, data of different terminal devices may be mapped to different subcarriers.

A frequency domain resource for sending the DMRS is determined by a DMRS configuration type of the terminal device indicated by a network device. For example, there are two DMRS configuration types: a configuration type 1 and a configuration type 2. A DMRS frequency domain density corresponding to the configuration type 1 is three resource elements (resource elements, REs)/antenna ports/physical resource blocks (physical resource blocks, PRBs), and a DMRS density corresponding to the configuration type 2 is two REs/antenna ports/PRBs.

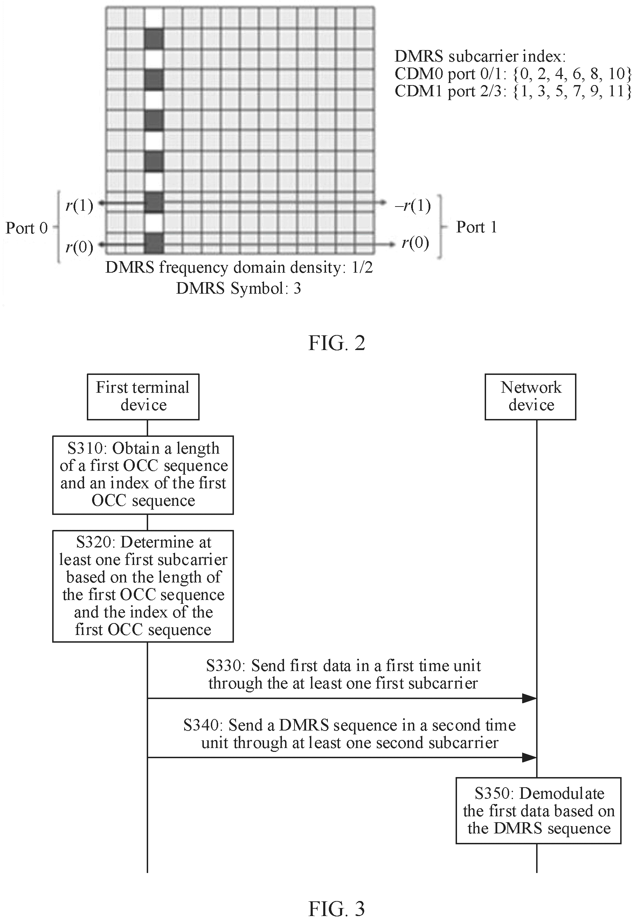

As shown in FIG. 2, the configuration type 1 is used as an example. Because the DMRS density is 1/2 of a scheduled band, a length of a DMRS sequence is half of a quantity of subcarriers for transmitting data. Subcarriers whose indexes are {0, 2, 4, 6, 8, 10} form a code division multiplexing (code division multiplexing, CDM) group, for example, CDM0, and the terminal device may send DMRSs on the subcarriers whose indexes are {0, 2, 4, 6, 8, 10} through a port 0 and a port 1. Subcarriers whose indexes are {1, 3, 5, 7, 9, 11} form another CDM group, for example, CDM1, and the terminal device may send DMRSs on the subcarriers whose indexes are {1, 3, 5, 7, 9, 11} through a port 2 and a port 3.

It can be learned from the DMRS configuration type shown in FIG. 2 that a DMRS sequence sent by the terminal device occupies odd-numbered subcarriers or even-numbered subcarriers. When multi-user resource multiplexing is performed through intra-symbol OCC encoding, a mismatch occurs between a subcarrier for transmitting data and a subcarrier for transmitting a DMRS sequence, resulting in inaccurate channel estimation and degraded data demodulation performance.

In view of this, an embodiment of this application provides a communication method. According to the method, matching between a subcarrier for transmitting data and a subcarrier for transmitting a DMRS sequence can be achieved, thereby improving channel estimation accuracy and data demodulation performance.

For ease of understanding of embodiments of this application, the following descriptions are provided.

First, in this application, unless otherwise stated or if there is a logic conflict, terms and/or descriptions in different embodiments are consistent and may be mutually referenced, and technical features in different embodiments may be combined into a new embodiment based on an internal logical relationship thereof.

Second, in this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" generally indicates an "or" relationship between the associated objects. "At least one item (piece) of the following" or a similar expression thereof means any combination of these items, including a singular item (piece) or any combination of plural items (pieces). For example, at least one item (piece) of a, b, and c may indicate a, b, c, a and b, a and c, b and c, or a, b, and c. Each of a, b, and c may be singular or plural.

Third, in this application, "first", "second", and various numerical numbers (for example, #1 and #2) indicate differentiation for ease of description, and are not intended to limit the scope of embodiments of this application, for example, are used to distinguish between different messages but not to describe a specific order or sequence. It should be understood that objects described in such a way may be interchanged in an appropriate circumstance, so that a solution other than embodiments of this application can be described.

Fourth, in this application, the terms "include" and "have" and any other variants thereof are intended to cover non-exclusive inclusion. For example, a process, a method, a system, a product, or a device that includes a series of steps or units is not necessarily limited to those steps or units that are clearly listed, but may include other steps or units that are not clearly listed or inherent to the process, the method, the product, or the device.

Fifth, in this application, "indicate" may include directly indicating and indirectly indicating. When a piece of indication information is described as indicating A, the indication information may directly indicate A or indirectly indicate A, but it does not indicate that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Sixth, in this application, a "protocol" may be a standard protocol in the communication field, for example, may include a 5G protocol, an NR protocol, and a related protocol used in a future communication system. This is not limited in this application. "Pre-defined" may include defined in advance, for example, defined in a protocol. "Pre-configured" may be implemented by pre-storing corresponding code or a corresponding table in a device, or may be implemented in another manner that may indicate related information. A specific implementation thereof is not limited in this application.

Seventh, in this application, "storage" may mean storage in one or more memories. The one or more memories may be separately disposed, or may be integrated into an encoder, a decoder, a processor, or a communication apparatus. Alternatively, a part of the one or more memories may be separately disposed, and a part the one or more memories may be integrated into a decoder, a processor, or a communication apparatus. A type of the memory may be a storage medium in any form. This is not limited in this application.

Eighth, in this application, if there is no logic conflict, "reporting", "feeding back", and "sending" may be interchanged.

FIG. 3 is a schematic flowchart of a communication method according to an embodiment of this application. As shown in FIG. 3, the method may include steps 310 to 350. The following describes steps 310 to 350 in detail.

Step 310: A first terminal device obtains a length of a first OCC sequence and an index of the first OCC sequence.

It should be understood that the first terminal device herein may be the first terminal device itself, or may be a processor, a module, a chip, a chip system, or the like that is in the first terminal device and that implements the method. This is not limited in this application.

In this embodiment of this application, the first terminal device may obtain the length of the first OCC sequence and the index of the first OCC sequence. The first OCC sequence is used to perform OCC encoding on data transmitted by the first terminal device to a network device.

There are a plurality of implementations in which the first terminal device obtains the length of the first OCC sequence. This is not specifically limited in this embodiment of this application. In a possible implementation, the network device may configure the length of the first OCC sequence for the first terminal device by using indication information. In another possible implementation, the network device may alternatively agree with the first terminal device that the length of the first OCC sequence is a fixed value, and the length of the first OCC sequence needs to be divisible by ${M}_{SC}^{PUCCH}$, where ${M}_{SC}^{PUCCH} = 12 * {N}_{RB}$*.*

For example, the indication information may be a radio resource control (radio resource control, RRC) message or a downlink control information (downlink control information, DCI) message. This is not specifically limited in this application.

There are a plurality of implementations in which the first terminal device obtains the index of the first OCC sequence. This is not specifically limited in this embodiment of this application. In a possible implementation, the network device may configure the index of the first OCC sequence for the first terminal device by using the indication information. In another possible implementation, the first terminal device may alternatively determine the index of the first OCC sequence based on an antenna port number sent by the network device.

For example, the network device may send DCI to the first terminal device, where the DCI includes an antenna port field, and the antenna port field is used to indicate an antenna port number used by the first terminal device to send a DMRS. The network device and the first terminal device may agree that when the length of the first OCC sequence is 2, the index of the first OCC sequence used by the first terminal is related to the antenna port number that is used to send a DMRS and that is indicated in the DCI. For example, when a total quantity of ports is 4, ports 0 and 1 occupy odd-numbered subcarriers, and ports 2 and 3 occupy even-numbered subcarriers. Therefore, when the port numbers indicated in the DCI are 0 and 1, the index of the first OCC sequence used by the first terminal device is 0; or when the port numbers indicated in the DCI are 2 and 3, the index of the first OCC sequence used by the first terminal device is 1.

Step 320: The first terminal device determines at least one first subcarrier based on the length of the first OCC sequence and the index of the first OCC sequence.

In this embodiment of this application, after obtaining the length of the first OCC sequence and the index of the first OCC sequence, the first terminal device may determine the at least one first subcarrier based on the length of the first OCC sequence and the index of the first OCC sequence. The at least one first subcarrier is used to transmit data of the terminal device.

In the following, an example in which one resource block (resource block, RB) includes 12 subcarriers is used, and when an intra-orthogonal frequency division multiplexing (orthogonal frequency division multiplexing, OFDM) symbol OCC (also referred to as intra-OFDM OCC) is used, a correspondence between a length of an OCC sequence (referred to as an OCC length for short) and a quantity ${N}_{SC} = \frac{{M}_{SC}^{PUCCH}}{OCC length}$ of first subcarriers for transmitting data is described with reference to Table 1.

**Table 1 Correspondence between the length of the OCC sequence and the quantity of the first subcarriers for transmitting data**

| OCC length | Quantity of the first subcarriers for transmitting data |
|---|---|
| 2 | 6 |
| 3 | 4 |
| 4 | 3 |
| 6 | 2 |
| 12 | 1 |

Refer to the correspondence between the length of the OCC sequence and the quantity of the first subcarriers for transmitting data in Table 1. If the length of the OCC sequence is 2, two terminal devices may perform multiplexing on the same resource to transmit data, and each terminal device transmits data by using six first subcarriers. If the length of the OCC sequence is 3, three terminal devices may perform multiplexing on the same resource to transmit data, and each terminal device transmits data by using four first subcarriers. If the length of the OCC sequence is 4, four terminal devices may perform multiplexing on the same resource to transmit data, and each terminal device transmits data by using three first subcarriers. If the length of the OCC sequence is 6, six terminal devices may perform multiplexing on the same resource to transmit data, and each terminal device transmits data by using two first subcarriers. If the length of the OCC sequence is 12, 12 terminal devices may perform multiplexing on the same resource to transmit data, and each terminal device transmits data by using one first subcarrier.

For example, the first terminal device may determine, by using the following formula, a position (which may also be referred to as a position index) of the at least one first subcarrier used for transmitting data. $OCC index + \left(m-1\right) * OCC length , m = 1 , … , d$ (1); $OCC index - 1 + \left(m-1\right) * OCC length , m = 1 , … , d$ (2); or $OCC index + 1 + \left(m-1\right) * OCC length , m = 1 , … , d$ (3); where OCC index represents the index of the first OCC sequence, OCC length represents the length of the OCC sequence, and d represents the quantity of the at least one first subcarrier for transmitting data.

It should be noted that the first terminal device may select, based on the index of the OCC sequence and whether an index of the at least one first subcarrier starts from 0 or 1, one formula from the foregoing three formulas to calculate the position of the at least one first subcarrier.

For example, if the index of the at least one first subcarrier starts from 0, and the index of the OCC sequence starts from 0, the first terminal device may calculate the position of the at least one first subcarrier by using the foregoing formula (1). Alternatively, if the index of the at least one first subcarrier starts from 1, and the index of the OCC sequence starts from 1, the first terminal device may calculate the position of the at least one first subcarrier by using the foregoing formula (1).

For another example, if the index of the at least one first subcarrier starts from 0, and the index of the OCC sequence starts from 1, the first terminal device may calculate the position of the at least one first subcarrier by using the foregoing formula (2).

If the index of the at least one first subcarrier starts from 1, and the index of the OCC sequence starts from 0, the first terminal device may calculate the position of the at least one first subcarrier by using the foregoing formula (3).

For example, Table 2 shows the position of the at least one first subcarrier determined based on the length of the first OCC sequence and the index of the first OCC sequence.

**Table 2 Position of the at least one first subcarrier**

| OCC length | Quantity of the first subcarriers for transmitting data | Position of the at least one first subcarrier |
|---|---|---|
| 2 | 6 | UE 1: {0, 2, 4, 6, 8, 10}; UE 2: {1, 3, 5, 7, 9, 11} |
| 3 | 4 | UE 1: {0, 3, 6, 9}; UE 2: {1, 4, 7, 10}; UE 3: {2, 5, 8, 11} |
| 4 | 3 | UE 1: {0, 4, 8}; UE 2: {1, 5, 9}; UE 3: {2, 6, 10}; UE 4: {3, 7, 11} |
| 6 | 2 | UE 1: {0, 6}; UE 2: {1, 7}; UE 3: {2, 8}; UE 4: {3, 9}; UE 5: {4, 10}; UE 6: {5, 11} |
| 12 | 1 | UE 1: {0}; UE 2: {1}; UE 3: {2}; UE 4: {3}; UE 5: {4}; UE 6: {5}; UE 7: {6}; UE 8: {7}; UE 9: {8}; UE 10: {9}; UE 11: {10}; UE 12: {11} |

Refer to Table 2. If the length of the OCC sequence is 2, two terminal devices may perform multiplexing on the same resource to transmit data, where a position of at least one first subcarrier used by the UE 1 to transmit data is {0, 2, 4, 6, 8, 10}, and a position of at least one first subcarrier used by the UE 2 to transmit data is {1, 3, 5, 7, 9, 11}. If the length of the OCC sequence is 3, three terminal devices may perform multiplexing on the same resource to transmit data, where a position of at least one first subcarrier used by the UE 1 to transmit data is {0, 3, 6, 9}, a position of at least one first subcarrier used by the UE 2 to transmit data is {1, 4, 7, 10}, and a position of at least one first subcarrier used by the UE 3 to transmit data is {2, 5, 8, 11}. If the length of the OCC sequence is 6, six terminal devices may perform multiplexing on the same resource to transmit data, where a position of at least one first subcarrier used by the UE 1 to transmit data is {0, 6}, a position of at least one first subcarrier used by the UE 2 to transmit data is {1, 7}, a position of at least one first subcarrier used by the UE 3 to transmit data is {2, 8}, a position of at least one first subcarrier used by the UE 4 to transmit data is {3, 9}, a position of at least one first subcarrier used by the UE 5 to transmit data is {4, 10}, and a position of at least one first subcarrier used by the UE 6 to transmit data is {5, 11}. If the length of the OCC sequence is 12, 12 terminal devices may perform multiplexing on the same resource to transmit data, where a position of at least one first subcarrier used by the UE 1 to transmit data is {0}, a position of at least one first subcarrier used by the UE 2 to transmit data is {1}, a position of at least one first subcarrier used by the UE 3 to transmit data is {2}, a position of at least one first subcarrier used by the UE 4 to transmit data is {3}, a position of at least one first subcarrier used by the UE 5 to transmit data is {4}, a position of at least one first subcarrier used by the UE 6 to transmit data is {5}, a position of at least one first subcarrier used by the UE 7 to transmit data is {6}, a position of at least one first subcarrier used by the UE 8 to transmit data is {7}, a position of at least one first subcarrier used by the UE 9 to transmit data is {8}, a position of at least one first subcarrier used by the UE 10 to transmit data is {9}, a position of at least one first subcarrier used by the UE 11 to transmit data is {10}, and a position of at least one first subcarrier used by the UE 12 to transmit data is {11}.

Step 330: The first terminal device sends first data in a first time unit through the at least one first subcarrier.

In this embodiment of this application, the first terminal device may send the first data to the network device in the first time unit through the at least one first subcarrier. The first data is data obtained by performing OCC encoding on second data based on the OCC sequence.

For example, an example in which the first terminal device uses an OCC sequence with n=0 from an OCC sequence whose length is 4 in Table 3 is used. The first terminal device multiplies the second data by the OCC sequence with n=0 to obtain the first data, and sends the first data to the network device through the at least one first subcarrier.

**Table 3 OCC sequence whose length is 4**

| n | Wn |
|---|---|
| 0 | [+1, +1, +1, +1] |
| 1 | [+1, -j, -1, +j] |
| 2 | [+1, -1, +1, -1] |
| 3 | [+1, +j, -1, -j] |

Step 340: The first terminal device sends a DMRS sequence in a second time unit through the at least one second subcarrier.

In this embodiment of this application, the first terminal device may send the DMRS sequence in the second time unit through the at least one second subcarrier, and the at least one second subcarrier belongs to the at least one first subcarrier.

The following provides a detailed description of several different implementations of the at least one second subcarrier.

In a possible implementation, the at least one second subcarrier is the at least one first subcarrier. To be specific, both a quantity and a position of the at least one second subcarrier are the same as the quantity and the position of the at least one first subcarrier. In this implementation, the network side may configure or agree that when an intra-symbol OCC is used for scheduled data, scheduling through a plurality of antenna ports is not supported. In this case, an indication of the antenna port field in the DCI may be ignored, or short-format DCI that does not include the field is used to indicate scheduling.

It should be noted that, in the foregoing implementation, a length of the DMRS sequence is equal to a quantity of subcarriers occupied by the data, and may indicate a power factor for performing power aggregation on the DMRS sequence. In this case, the power aggregation factor of the DMRS sequence may be the same as or different from a power aggregation factor of the data.

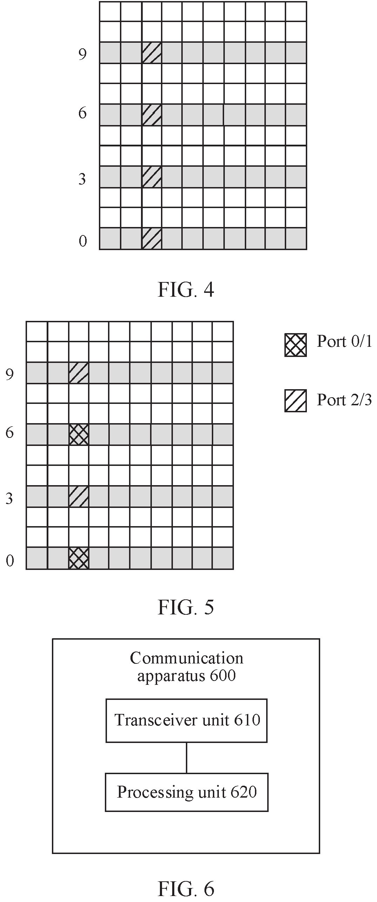

For example, as shown in FIG. 4, an example in which one RB includes 12 subcarriers is used. When an intra-OFDM OCC is used, M=4 modulation symbols form a group, and extension is performed by using an OCC sequence whose length is L=3. It is assumed that the position of the at least one first subcarrier used by the first terminal device to transmit data is {0, 3, 6, 9}, and the position of the at least one second subcarrier used by the first terminal device to transmit the DMRS sequence is {0, 3, 6, 9}. In other words, the first terminal device transmits the data by using four subcarriers whose positions are {0, 3, 6, 9}, and transmits the DMRS sequence by using the four subcarriers whose positions are {0, 3, 6, 9}.

It should be understood that, in FIG. 4, a horizontal axis represents a time unit, a vertical axis represents a position of a subcarrier, and the position of the subcarrier is a position of the subcarrier in frequency domain.

In this embodiment of this application, a time unit for transmitting data by the first terminal device is different from a time unit for transmitting a DMRS sequence. For example, the first terminal device transmits the data in the first time unit through the at least one first subcarrier, and transmits the DMRS sequence in the first time unit through the at least one second subcarrier, where the first time unit is different from the second time unit.

In another possible implementation, when the quantity of the at least one first subcarrier is an odd number, the at least one second subcarrier is the same as the at least one first subcarrier.

In another possible implementation, when the quantity of the at least one first subcarrier is an even number, the quantity of the at least one second subcarrier is half of the quantity of the at least one first subcarrier, that is, the length of the DMRS sequence transmitted on the at least one second subcarrier is half of the quantity of the at least one first subcarrier.

In the foregoing implementation, the network side may configure or agree that when an intra-symbol OCC is used for scheduled data, scheduling through a plurality of antenna ports is supported. In this case, the antenna port field in the DCI indicates the plurality of antenna ports.

It should be understood that a quantity of antenna ports is related to a quantity of symbols occupied by the DMRS sequence. For example, for a single-symbol DMRS sequence, the quantity of antenna ports is 2 (a port 0 and a port 1). For another example, for a dual-symbol DMRS sequence, the quantity of antenna ports is 4 (a port 0 to a port 3).

For example, Table 4 shows quantities of at least one second subcarrier occupied by the DMRS sequence in different cases.

**Table 4 Quantity of the at least one second subcarrier**

| OCC length | Quantity of the first subcarriers for transmitting data | Quantity of the at least one second subcarrier |
|---|---|---|
| 2 | 6 | CDM0 port 0/1: Three second subcarriers |
| | | CDM1 port 2/3: Three second subcarriers |
| 3 | 4 | CDM0 port 0/1: Two second subcarriers |
| | | CDM1 port 2/3: Two second subcarriers |
| 4 | 3 | -- |
| 6 | 2 | CDM0 port 0/1: One second subcarrier |
| | | CDM1 port 2/3: One second subcarrier |
| 12 | 1 | -- |

Refer to Table 4. When the quantity of the first subcarriers is 3 or 1, because the quantity is an odd number, scheduling through a plurality of antenna ports is not supported. When the quantity of the first subcarriers is 6, the length of the DMRS sequence is half of the quantity of the first subcarriers. In other words, a quantity of second subcarriers corresponding to the port 0 and the port 1 in CDM0 is 3, and a quantity of second subcarriers corresponding to the port 2 and the port 3 in CDM0 is 3. When the quantity of the first subcarriers is 4, the length of the DMRS sequence is half of the quantity of the first subcarriers. In other words, a quantity of second subcarriers corresponding to the port 0 and the port 1 in CDM0 is 2, and a quantity of second subcarriers corresponding to the port 2 and the port 3 in CDM0 is 2. When the quantity of the first subcarriers is 2, the length of the DMRS sequence is half of the quantity of the first subcarriers. In other words, a quantity of second subcarriers corresponding to the port 0 and the port 1 in CDM0 is 1, and a quantity of second subcarriers corresponding to the port 2 and the port 3 in CDM0 is 1.

In this embodiment of this application, when the quantity of the at least one first subcarrier is an even number, the first terminal device may determine, based on the length of the first OCC sequence, the index of the first OCC sequence, and the antenna port number in the indication information, the at least one second subcarrier used for transmitting the DMRS sequence.

For example, the first terminal device may determine, by using the following formula, the position (which may also be referred to as a position index) of the at least one second subcarrier used for transmitting the DMRS sequence. $k 2 = 4 n ∗ OCC length + 2 k ′ ∗ OCC length + Δ ∗ OCC length + OCC index$ (4) where k2 represents the position index of the at least one second subcarrier, *n* is used to determine an element in the DMRS sequence transmitted on the second subcarrier, *k'* represents an index of an element in an OCC sequence of a DMRS sequence, and Δ represents different CDM groups.

For example, Table 4 shows the position *k*2 that is of the at least one second subcarrier used for transmitting the DMRS sequence and that is determined according to the foregoing formula (4).

**Table 5 Position of the at least one second subcarrier**

| | *OCC index* | Δ * *OCC length=*0 | | Δ * *OCC length=3* | |
|---|---|---|---|---|---|
| | | *k'=*0 | *k'*=1 | *k'=*0 | *k'=*1 |
| n=0 | 0 | k2=0 | k2=6 | k2=3 | k2=9 |
| | 1 | k2=1 | k2=7 | k2=4 | k2=10 |
| | 2 | k2=2 | k2=8 | k2=5 | k2=11 |

It should be understood that Table 5 is described by using an example in which one RB includes 12 subcarriers and extension is performed by using an OCC sequence whose length is L=3, that is, three terminal devices may perform multiplexing on the same resource to transmit data. A position of at least one first subcarrier used by a UE 1 (a UE that uses an OCC sequence whose index is 0) to transmit data is {0, 3, 6, 9}, a position of at least one first subcarrier used by a UE 2 (a UE that uses an OCC sequence whose index is 1) to transmit data is {1, 4, 7, 10}, and a position of at least one first subcarrier used by a UE 3 (a UE that uses an OCC sequence whose index is 2) to transmit data is {2, 5, 8, 11}.

Refer to Table 5. For the UE 1 (the UE that uses the OCC sequence whose index is 0), a position of at least one second subcarrier for transmitting a DMRS sequence is {0, 3, 6, 9}. Through a plurality of antenna ports of a CDM group, second subcarriers whose positions are {0, 6} are used to transmit the DMRS sequence, and through a plurality of antenna ports of another CDM group, second subcarriers whose positions are {3, 9} are used to transmit the DMRS sequence. For the UE 2 (the UE that uses the OCC sequence whose index is 1), a position of at least one second subcarrier for transmitting a DMRS sequence is {1, 4, 7, 10}. Through a plurality of antenna ports of a CDM group, second subcarriers whose positions are {1, 7} are used to transmit the DMRS sequence, and through a plurality of antenna ports of another CDM group, second subcarriers whose positions are {4, 10} are used to transmit the DMRS sequence. For the UE 3 (the UE that uses the OCC sequence whose index is 2), a position of at least one first subcarrier for transmitting data is {2, 5, 8, 11}. Through a plurality of antenna ports of a CDM group, second subcarriers whose positions are {2, 8} are used to transmit the DMRS sequence, and through a plurality of antenna ports of another CDM group, second subcarriers whose positions are {5, 11} are used to transmit the DMRS sequence.

For example, FIG. 5 shows at least one first subcarrier for transmitting data by the UE 1 and at least one second subcarrier for transmitting a DMRS sequence. Second subcarriers whose positions are {0, 6} may form a CDM group, including two antenna port numbers: one is a port 0, and the other is a port 1. Second subcarriers whose positions are {3, 9} may form a CDM group, including two antenna port numbers: one is a port 2, and the other is a port 3.

It should be noted that the two antenna ports may perform multiplexing on one second subcarrier by performing OCC encoding on the DMRS sequence, and an OCC sequence used in the OCC encoding is an OCC sequence of the DMRS sequence.

In another possible implementation, when the quantity of the at least one first subcarrier is an even number, the at least one second subcarrier is an intersection between the at least one first subcarrier and at least one third subcarrier, and the at least one third subcarrier depends on the antenna port number. In other words, an position index of at least one third subcarrier corresponding to a port may be determined based on the port number indicated in the indication information (for example, the DCI).

For example, the position (which may also be referred to as a position index) of the at least one third subcarrier is determined by using the following formula: $k 1 = 4 n + 2 k ′ ∗ + Δ$ (5) where k1 represents the position index of the at least one second subcarrier, *n* is used to determine the element in the DMRS sequence transmitted on the second subcarrier, *k'* represents the index of the element in the OCC sequence of the DMRS sequence, and Δ represents different CDM groups.

For example, there is one RB, and the length of the DMRS sequence is 6. It is determined, based on the port number indicated in the indication information (for example, the DCI), that position indices of third subcarriers corresponding to the port 0 and the port 1 in CDM0 are {0, 2, 4, 6, 8, 10}, and position indices of third subcarriers corresponding to the port 2 and the port 3 in CDM1 are {1, 3, 5, 7, 9, 11}. The following Table 6 lists, by using position indices {0, 2, 4, 6, 8, 10} of third subcarriers as an example, positions of the at least one second subcarrier determined by the first terminal device (for example, the UE 1) in different scenarios and an element transmitted on each second subcarrier.

**Table 6 Position of the at least one second subcarrier and elements transmitted of the at least one third subcarrier**

| Index of the third subcarrier | 0 | 2 | 4 | 6 | 8 | 10 |
|---|---|---|---|---|---|---|
| Element transmitted on the third subcarrier | r(0)*w(0) | r(1)*w(1) | r(2)*w(0) | r(3)*w(1) | r(4)*w(0) | r(5)*w(1) |
| OCC length 2 for data encoding | r(0)*w(0) | r(1)*w(1) | r(2)*w(0) | r(3)*w(1) | r(4)*w(0) | r(5)*w(1) |
| OCC length 3 for data encoding | r(0)*w(0) | | | r(3)*w(1) | | |
| OCC length 4 for data encoding | r(0) | | r(1) | | r(2) | |
| OCC length 6 for data encoding | r(0)*w(0) | | | r(3)*w(1) | | |
| OCC length 12 for data encoding | r(0) | | | | | |

Refer to Table 6. The UE 1 is used as an example. The UE 1 determines, based on a port number indicated in the indication information (for example, the DCI), that an position index of at least one third subcarrier corresponding to the port is {0, 2, 4, 6, 8, 10}. An element transmitted by the UE 1 on the third subcarrier whose position index is 0 is r(0)*w(0), an element transmitted on the third subcarrier whose position index is 2 is r(1)*w(1), an element transmitted on the third subcarrier whose position index is 4 is r(2)*w(0), an element transmitted on the third subcarrier whose position index is 6 is r(3)*w(1), an element transmitted on the third subcarrier whose position index is 8 is r(4)*w(0), and an element transmitted on the third subcarrier whose position index is 10 is r(5)*w(1). r represents an element in the DMRS sequence, and w represents an element in the OCC sequence of the DMRS sequence.

For example, for OCC length 2 for data encoding, it can be learned from Table 2 that the position of the at least one first subcarrier used by the UE 1 to transmit data is {0, 2, 4, 6, 8, 10}, and an intersection between the at least one first subcarrier and the at least one third subcarrier is {0, 2, 4, 6, 8, 10}. In other words, the at least one second subcarrier used by the UE 1 to transmit the DMRS sequence is the same as the at least one third subcarrier, the position of the at least one second subcarrier is {0, 2,4,6,8,10}, and an element transmitted on the at least one second subcarrier at {0,2,4,6,8,10} is the same as an element transmitted on the at least one third subcarrier.

For another example, for OCC length 3 for data encoding, it can be learned from Table 2 that the position of the at least one first subcarrier used by the UE 1 to transmit data is {0, 3, 6, 9}, and an intersection between the at least one first subcarrier and the at least one third subcarrier is {0, 6}. In other words, the position of the at least one second subcarrier used by the UE 1 to transmit the DMRS sequence is {0, 6}, and an element transmitted on the at least one second subcarrier at {0, 6} is the same as an element transmitted on the at least one third subcarrier at {0, 6}.

For another example, for OCC length 4 for data encoding, it can be learned from Table 2 that the position of the at least one first subcarrier used by the UE 1 to transmit data is {0, 4, 8}, and an intersection between the at least one first subcarrier and the at least one third subcarrier is {0, 4, 8}. In other words, the position of the at least one second subcarrier used by the UE 1 to transmit the DMRS sequence is {0, 4, 8}, and an element transmitted on the at least one second subcarrier at {0, 4, 8} is r(0), r(1), and r(2) respectively. It should be understood that, because the quantity of the at least one first subcarrier is an odd number (3) herein, scheduling through a plurality of antenna ports is not supported. In other words, in the element transmitted on each second subcarrier, the element r in the DMRS sequence does not need to be multiplied by the element in the OCC sequence of the DMRS sequence.

For another example, for OCC length 6 for data encoding, it can be learned from Table 2 that the position of the at least one first subcarrier used by the UE 1 to transmit data is {0, 6}, and an intersection between the at least one first subcarrier and the at least one third subcarrier is {0, 6}. In other words, the position of the at least one second subcarrier used by the UE 1 to transmit the DMRS sequence is {0, 6}, and an element transmitted on the at least one second subcarrier at {0, 6} is the same as an element transmitted on the at least one third subcarrier at {0, 6}.

For another example, for OCC length 12 for data encoding, it can be learned from Table 2 that the position of the at least one first subcarrier used by the UE 1 to transmit data is {0}, and an intersection between the at least one first subcarrier and the at least one third subcarrier is {0}. In other words, the position of the at least one second subcarrier used by the UE 1 to transmit the DMRS sequence is {0}, and an element transmitted on the at least one second subcarrier at {0} is r(0). It should be understood that, because the quantity of the at least one first subcarrier is an odd number (1) herein, scheduling through a plurality of antenna ports is not supported. In other words, in the element transmitted on each second subcarrier, the element r in the DMRS sequence does not need to be multiplied by the element in the OCC sequence of the DMRS sequence.

In the foregoing implementation, better compatibility with an existing terminal device can be achieved.

Step 350: After receiving the first data and the DMRS sequence that are sent by the first terminal device, the network device may demodulate the first data based on the DMRS sequence.

In this embodiment of this application, the network device receives, through the at least one first subcarrier, the first data sent by the first terminal device, may further receive, through the at least one second subcarrier, the DMRS sequence sent by the first terminal device, performs channel estimation based on the DMRS sequence, and demodulates the first data.

In the foregoing technical solution, the at least one second subcarrier for transmitting the DMRS sequence is configured to belong to the at least one subcarrier for transmitting data, so that matching between the subcarrier for transmitting the DMRS sequence and the subcarrier for transmitting data can be achieved, and the DMRS sequence can match the transmitted data, thereby improving channel estimation performance and data demodulation performance of the network device, and avoiding interference to channel estimation of another terminal device caused by sending the DMRS sequence on a subcarrier used for transmitting data by the another terminal device.

In addition, it is also mentioned above that when an intra-OFDM OCC is used, power aggregation may be performed on data. If a subcarrier for transmitting the DMRS sequence is adapted to a subcarrier for transmitting data, that is, in comparison with a density of the DMRS sequence in the conventional technology, a density of the DMRS sequence in this application may be further reduced, and power aggregation may also be performed to improve channel estimation performance and further enhance data demodulation performance.

The foregoing describes the method embodiments in embodiments of this application with reference to the accompanying drawings, and the following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

It may be understood that in the foregoing method embodiments, the method and operations implemented by the terminal device may alternatively be implemented by a component (for example, a chip or a circuit) that may be used in the terminal device, and the method and operations implemented by the network device may alternatively be implemented by a component (for example, a chip or a circuit) that may be used in the network device.

The foregoing mainly describes the solutions provided in embodiments of this application from a perspective of interaction between network elements. It may be understood that, to implement the foregoing functions, each network element like a transmit device or a receive device includes a corresponding hardware structure and/or software module for performing each function. A person skilled in the art may be aware that, units and algorithm steps of the examples described in embodiments disclosed in this specification can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of a transmit device or a receive device may be obtained through division based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. In actual implementation, another division manner may be used. An example in which each functional module is obtained through division based on each corresponding function is used below for description.

FIG. 6 is a diagram of a structure of a communication apparatus according to an embodiment of this application.

The communication apparatus 600 includes a transceiver unit 610 and a processing unit 620. The transceiver unit 610 may be configured to implement a corresponding communication function. The processing unit 620 may be configured to perform data processing.

Optionally, the transceiver unit 610 may also be referred to as a communication interface or a communication unit, and includes a sending unit and/or a receiving unit. The transceiver unit 610 may be a transceiver (including a transmitter and/or a receiver), an input/output interface (including an input interface and/or an output interface), a pin, a circuit, or the like. The transceiver unit 610 may be configured to perform a sending step and/or a receiving step in the foregoing method embodiments.

Optionally, the processing unit 620 may be a processor (may include one or more processors), a processing circuit having a processor function, or the like, and may be configured to perform a step other than sending and receiving in the foregoing method embodiments.

Optionally, the apparatus 600 further includes a storage unit. The storage unit may be a memory, an internal storage unit (for example, a register or a cache), an external storage unit (for example, a read-only memory or a random access memory), or the like. The storage unit is configured to store instructions. The processing unit 620 executes the instructions stored in the storage unit, to cause the communication apparatus to perform the foregoing method.

In a design, the apparatus 600 may correspond to the first terminal device in the foregoing method embodiments, or may be a component (for example, a chip) of the first terminal device.

The communication apparatus 600 may implement steps or procedures performed by the first terminal device in the foregoing method embodiments. The transceiver unit 610 may be configured to perform receiving/sending-related operations of the first terminal device in the foregoing method embodiments. The processing unit 620 may be configured to perform processing-related operations of the first terminal device in the foregoing method embodiments.

In a possible implementation, the processing unit 620 is configured to obtain a length of a first orthogonal cover code OCC sequence and an index of the first OCC sequence; the processing unit 620 is further configured to determine at least one first subcarrier based on the length of the first OCC sequence and the index of the first OCC sequence; the transceiver unit 610 is configured to send first data in a first time unit through the at least one first subcarrier, where the first data is obtained by performing OCC encoding on second data based on the first OCC sequence; and the transceiver unit 610 is further configured to send a demodulation reference signal DMRS sequence in a second time unit through at least one second subcarrier, where the at least one second subcarrier belongs to the at least one first subcarrier, and the DMRS sequence is used to demodulate the first data.

Optionally, when a quantity of the at least one first subcarrier is an odd number, the at least one second subcarrier is the at least one first subcarrier.

Optionally, when a quantity of the at least one first subcarrier is an even number, the at least one second subcarrier is determined based on the length of the first OCC sequence, the index of the first OCC sequence, and an antenna port number.

Optionally, the transceiver unit 610 is further configured to receive indication information, where the indication information indicates the antenna port number.

Optionally, the processing unit 620 is specifically configured to determine the index of the first OCC sequence based on the antenna port number.

Optionally, the length of the first OCC sequence is 2.

Optionally, the at least one second subcarrier is an intersection between the at least one first subcarrier and at least one third subcarrier, and the at least one third subcarrier depends on the antenna port number.

Optionally, the at least one third subcarrier satisfies the following formula: $k 1 = 4 n + 2 k ′ + Δ$ where k1 represents a position index of the at least one second subcarrier, *n* is used to determine an element in the DMRS sequence transmitted on the second subcarrier, *k'* represents an index of an element in an OCC sequence of a DMRS sequence, and Δ represents different code division multiplexing CDM groups.

Optionally, the at least one first subcarrier satisfies the following formula: $OCC index + \left(m-1\right) * OCC length , m = 1 , … , d ;$ $OCC index - 1 + \left(m-1\right) * OCC length , m = 1 , … , d ;$ or $OCC index + 1 + \left(m-1\right) * OCC length , m = 1 , … , d$ where OCC index represents the index of the first OCC sequence, OCC length represents the length of the first OCC sequence, and d represents the quantity of the at least one first subcarrier.

Optionally, the at least one second subcarrier satisfies the following formula: $k 2 = 4 n ∗ OCC length + 2 k ′ ∗ OCC length + Δ ∗ OCC length + OCC index$ where k2 represents the position index of the at least one second subcarrier, *n* is used to determine the element in the DMRS sequence transmitted on the second subcarrier, *k'* represents the index of the element in the OCC sequence of the DMRS sequence, and Δ represents different code division multiplexing CDM groups.

It should be understood that a specific process in which the units perform the foregoing corresponding steps has been described in detail in the foregoing method embodiments, and for brevity, details are not described herein again.

In another design, the communication apparatus 600 may correspond to the network device in the foregoing method embodiments, or a component (for example, a chip) of the network device.

In a possible implementation, the transceiver unit 610 is configured to receive first data through at least one first subcarrier, where the first data is obtained by performing OCC encoding on second data based on a first OCC sequence; the transceiver unit 610 is further configured to receive a demodulation reference signal DMRS sequence through at least one second subcarrier, where the at least one second subcarrier belongs to the at least one first subcarrier, and the DMRS sequence is used to demodulate the first data; and the processing unit 620 is configured to demodulate the first data based on the DMRS sequence.

Optionally, when a quantity of the at least one first subcarrier is an odd number, the at least one second subcarrier is the at least one first subcarrier.

Optionally, when a quantity of the at least one first subcarrier is an even number, the at least one second subcarrier is determined based on a length of the first OCC sequence, an index of the first OCC sequence, and an antenna port number.

Optionally, the transceiver unit 610 is further configured to send indication information, where the indication information indicates the antenna port number.

Optionally, the antenna port number indicates the index of the first OCC sequence.

Optionally, the length of the first OCC sequence is 2.

Optionally, the at least one second subcarrier is an intersection between the at least one first subcarrier and at least one third subcarrier, and the at least one third subcarrier depends on the antenna port number.

Optionally, the at least one third subcarrier satisfies the following formula: $k 1 = 4 n + 2 k ′ + Δ$ where k1 represents a position index of the at least one second subcarrier, *n* is used to determine an element in the DMRS sequence transmitted on the second subcarrier, *k'* represents an index of an element in an OCC sequence of a DMRS sequence, and Δ represents different code division multiplexing CDM groups.

Optionally, the at least one first subcarrier satisfies the following formula: $OCC index + \left(m-1\right) * OCC length , m = 1 , … , d ;$ $OCC index - 1 + \left(m-1\right) * OCC length , m = 1 , … , d ;$ or $OCC index + 1 + \left(m-1\right) * OCC length , m = 1 , … , d$ where OCC index represents the index of the first OCC sequence, OCC length represents the length of the first OCC sequence, and d represents the quantity of the at least one first subcarrier.

Optionally, the at least one second subcarrier satisfies the following formula: $k 2 = 4 n ∗ OCC length + 2 k ′ ∗ OCC length + Δ ∗ OCC length + OCC index$ where k2 represents the position index of the at least one second subcarrier, *n* is used to determine the element in the DMRS sequence transmitted on the second subcarrier, *k'* represents the index of the element in the OCC sequence of the DMRS sequence, and Δ represents different code division multiplexing CDM groups.

It should be understood that a specific process in which the units perform the foregoing corresponding steps has been described in detail in the foregoing method embodiments, and for brevity, details are not described herein again.

It should be further understood that the communication apparatus 600 herein is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the communication apparatus 600 may be specifically the network device in the foregoing embodiments, and may be configured to perform procedures and/or steps corresponding to the network device in the foregoing method embodiments. To avoid repetition, details are not described herein again.

The communication apparatus 600 in the foregoing solutions has a function of performing corresponding steps performed by devices (for example, the first terminal device and the network device) in the foregoing method. The function may be implemented by hardware, or may be implemented by hardware executing corresponding software. The hardware or the software includes one or more modules corresponding to the foregoing function. For example, a transceiver unit may be replaced with a transceiver (for example, a sending unit in the transceiver unit may be replaced with a transmitter, and a receiving unit in the transceiver unit may be replaced with a receiver), and another unit like a processing unit may be replaced with a processor, to separately perform sending and receiving operations and related processing operations in the method embodiments.

In addition, the transceiver unit 610 may alternatively be a transceiver circuit (which, for example, may include a receiving circuit and a sending circuit), and the processing unit may be a processing circuit.

It should be noted that the communication apparatus 600 in FIG. 6 may be the network element or the device in the foregoing embodiments, or may be a chip or a chip system, for example, a system-on-chip (system-on-chip, SoC). The transceiver unit may be an input/output circuit or a communication interface. The processing unit is a processor, a microprocessor, or an integrated circuit integrated on the chip. This is not limited herein.

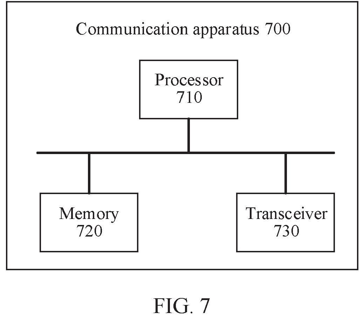

FIG. 7 is a diagram of a structure of a communication apparatus 700 according to an embodiment of this application. The communication apparatus 700 shown in FIG. 7 includes a processor 710, a memory 720, and a transceiver 730. The processor 710 is coupled to the memory 720, and is configured to execute instructions stored in the memory 720, to control the transceiver 730 to send a signal and/or receive a signal.

It should be understood that the processor 710 and the memory 720 may be integrated into one processing apparatus. The processor 710 is configured to execute program code stored in the memory 720, to implement the foregoing functions. During specific implementation, the memory 720 may alternatively be integrated into the processor 710, or may be independent of the processor 710. It should be understood that the processor 710 may alternatively correspond to each processing unit in the foregoing communication apparatus, and the transceiver 730 may correspond to each receiving unit and each sending unit in the foregoing communication apparatus.

It should be further understood that the transceiver 730 may include a receiver (also referred to as a receiver machine) and a transmitter (also referred to as a transmitter machine). The transceiver may further include an antenna, and a quantity of antennas may be one or more. The transceiver may alternatively be a communication interface or an interface circuit.

Specifically, the communication apparatus 700 may correspond to a device (the first terminal device or the network device) in FIG. 3 according to embodiments of this application. The communication apparatus 700 may include units of the method performed by the first terminal device in FIG. 3, or units of the method performed by the network device. It should be understood that a specific process in which the units perform the foregoing corresponding steps has been described in detail in the foregoing method embodiments, and for brevity, details are not described herein again.

When the communication apparatus 700 is a chip, the chip includes an interface unit and a processing unit. The interface unit may be an input/output circuit or a communication interface. The processing unit may be a processor, a microprocessor, or an integrated circuit integrated on the chip.

In an implementation process, the steps in the foregoing method may be implemented by using a hardware integrated logic circuit in the processor, or by using instructions in a form of software. The steps in the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments may be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the method, the steps, and the logical block diagrams that are disclosed in embodiments of this application. The general-purpose processor may be a microprocessor, or the processor may be any conventional processor or the like. The steps in the method disclosed with reference to embodiments of this application may be directly performed by a hardware decoding processor, or may be performed by a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

This application further provides a communication system, including a first terminal device and a network device. The first terminal device performs an action of the first terminal device in the foregoing method, and the network device performs an action of the network device.

This application further provides a computer-readable medium storing a computer program. When the computer program is executed by a computer, a function of any one of the foregoing method embodiments is implemented.

This application further provides a computer program product. When the computer program product is executed by a computer, a function of any one of the foregoing method embodiments is implemented.

All or a part of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer instructions are loaded and executed on the computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

A person of ordinary skill in the art may be aware that, units and algorithm steps of the examples described with reference to embodiments disclosed in this specification can be implemented by electronic hardware or a combination of computer software and electronic hardware. Whether a function is performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division. In actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps in the method described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement that can be readily figured out by a person skilled in the art within the technical scope disclosed in this application shall fall within the protection scope of this application. Therefore, the protection scope of this application shall be subject to the protection scope of the claims.

The terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated in the figure, both a compute device and an application that runs on the compute device may be components. One or more components may reside within a process and/or an execution thread, and a component may be located on one computer and/or distributed between two or more computers. In addition, these components may be executed from various computer-readable media that store various data structures. For example, the components may perform communication by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, units and algorithm steps of the examples described with reference to embodiments disclosed in this specification can be implemented by electronic hardware or a combination of computer software and electronic hardware. Whether a function is performed by hardware or software depends on particular applications and design constraints of the technical solutions. A person skilled in the art may use different methods to implement the described functions for each particular application, but it should not be considered that the implementation goes beyond the scope of this application.

## Claims

1. A communication method, comprising:
obtaining a length of a first orthogonal cover code OCC sequence and an index of the first OCC sequence;
determining at least one first subcarrier based on the length of the first OCC sequence and the index of the first OCC sequence;
sending first data in a first time unit through the at least one first subcarrier, wherein the first data is obtained by performing OCC encoding on second data based on the first OCC sequence; and
sending a demodulation reference signal DMRS sequence in a second time unit through at least one second subcarrier, wherein the at least one second subcarrier belongs to the at least one first subcarrier, and the DMRS sequence is used to demodulate the first data.

2. The method according to claim 1, wherein when a quantity of the at least one first subcarrier is an odd number, the at least one second subcarrier is the at least one first subcarrier.

3. The method according to claim 1, wherein when a quantity of the at least one first subcarrier is an even number, the at least one second subcarrier is determined based on the length of the first OCC sequence, the index of the first OCC sequence, and an antenna port number.

4. The method according to any one of claims 1 to 3, wherein the method further comprises:
receiving indication information, wherein the indication information indicates the antenna port number.

5. The method according to claim 4, wherein the obtaining the index of the first orthogonal cover code OCC sequence comprises:
determining the index of the first OCC sequence based on the antenna port number.

6. The method according to claim 5, wherein the length of the first OCC sequence is 2.

7. The method according to any one of claims 1 to 6, wherein the at least one second subcarrier is an intersection between the at least one first subcarrier and at least one third subcarrier, and the at least one third subcarrier depends on the antenna port number.

8. The method according to claim 7, wherein the at least one third subcarrier satisfies the following formula: $k 1 = 4 n + 2 k ′ + Δ$ wherein k1 represents a position index of the at least one second subcarrier, *n* is used to determine an element in the DMRS sequence transmitted on the second subcarrier, *k'* represents an index of an element in an OCC sequence of a DMRS sequence, and Δ represents different code division multiplexing CDM groups.

9. The method according to any one of claims 1 to 8, wherein the at least one first subcarrier satisfies the following formula: $OCC index + \left(m-1\right) * OCC length , m = 1 , … , d ;$ $OCC index - 1 + \left(m-1\right) * OCC length , m = 1 , … , d ; or$ $OCC index + 1 + \left(m-1\right) * OCC length , m = 1 , … , d$ wherein OCC index represents the index of the first OCC sequence, OCC length represents the length of the first OCC sequence, and d represents the quantity of the at least one first subcarrier.

10. The method according to any one of claims 3 to 8, wherein the at least one second subcarrier satisfies the following formula: $k 2 = 4 n ∗ OCC length + 2 k ′ ∗ OCC length + Δ ∗ OCC length + OCC index$ wherein k2 represents the position index of the at least one second subcarrier, *n* is used to determine the element in the DMRS sequence transmitted on the second subcarrier, *k'* represents the index of the element in the OCC sequence of the DMRS sequence, and Δ represents different code division multiplexing CDM groups.

11. A communication method, comprising:
receiving first data through at least one first subcarrier, wherein the first data is obtained by performing OCC encoding on second data based on a first orthogonal cover code OCC sequence;
receiving a demodulation reference signal DMRS sequence through at least one second subcarrier, wherein the at least one second subcarrier belongs to the at least one first subcarrier, and the DMRS sequence is used to demodulate the first data; and
demodulating the first data based on the DMRS sequence.

12. The method according to claim 11, wherein when a quantity of the at least one first subcarrier is an odd number, the at least one second subcarrier is the at least one first subcarrier.

13. The method according to claim 11, wherein when a quantity of the at least one first subcarrier is an even number, the at least one second subcarrier is determined based on a length of the first OCC sequence, an index of the first OCC sequence, and an antenna port number.

14. The method according to any one of claims 11 to 13, wherein the method further comprises:
sending indication information, wherein the indication information indicates the antenna port number.

15. The method according to claim 14, wherein the antenna port number indicates the index of the first OCC sequence.

16. The method according to claim 15, wherein the length of the first OCC sequence is 2.

17. The method according to any one of claims 11 to 16, wherein the at least one second subcarrier is an intersection between the at least one first subcarrier and at least one third subcarrier, and the at least one third subcarrier depends on the antenna port number.

18. The method according to claim 17, wherein the at least one third subcarrier satisfies the following formula: $k 1 = 4 n + 2 k ′ + Δ$ wherein k1 represents a position index of the at least one second subcarrier, *n* is used to determine an element in the DMRS sequence transmitted on the second subcarrier, *k'* represents an index of an element in an OCC sequence of a DMRS sequence, and Δ represents different code division multiplexing CDM groups.

19. The method according to any one of claims 11 to 18, wherein the at least one first subcarrier satisfies the following formula: $OCC index + \left(m-1\right) * OCC length , m = 1 , … , d ;$ $OCC index - 1 + \left(m-1\right) * OCC length , m = 1 , … , d ; or$ $OCC index + 1 + \left(m-1\right) * OCC length , m = 1 , … , d$ wherein OCC index represents the index of the first OCC sequence, OCC length represents the length of the first OCC sequence, and d represents the quantity of the at least one first subcarrier.

20. The method according to any one of claims 13 to 18, wherein the at least one second subcarrier satisfies the following formula: $k 2 = 4 n ∗ OCC length + 2 k ′ ∗ OCC length + Δ ∗ OCC length + OCC index$ wherein k2 represents the position index of the at least one second subcarrier, *n* is used to determine the element in the DMRS sequence transmitted on the second subcarrier, *k'* represents the index of the element in the OCC sequence of the DMRS sequence, and Δ represents different code division multiplexing CDM groups.

21. A communication apparatus, wherein the communication apparatus comprises a unit or a module configured to perform the method according to any one of claims 1 to 10.

22. A communication apparatus, wherein the communication apparatus comprises a unit or a module configured to perform the method according to any one of claims 11 to 20.

23. A chip, comprising a processor and a communication interface, wherein the communication interface is configured to: receive data and/or information, and transmit the received data and/or information to the processor; and the processor is configured to process the data and/or information, to perform the method according to any one of claims 1 to 10 or the method according to any one of claims 11 to 20.

24. A computer-readable storage medium, wherein the computer-readable storage medium stores instructions; and when the instructions are run on a computer, the computer is caused to perform the method according to any one of claims 1 to 10, or the computer is caused to perform the method according to any one of claims 11 to 20.

25. A computer program product, wherein the computer-readable storage medium stores instructions; and when the instructions are run on a computer, the computer is caused to perform the method according to any one of claims 1 to 10, or the computer is caused to perform the method according to any one of claims 11 to 20.

26. A communication system, comprising a network device and/or a terminal device, wherein the terminal device is configured to perform the method according to any one of claims 1 to 10, and the network device is configured to perform the method according to any one of claims 11 to 20.
